# EUROPÄISCHE PATENTSCHRIFT

(11) **EP 1 559 202 B1**
(45) Veröffentlichungstag und Bekanntmachung des Hinweises auf die Patenterteilung: **23.08.2006**
(21) Anmeldenummer: 03773538.8
(22) Anmeldetag: 15.10.2003
(51) Int. Cl.: H04B 1/38, H03G 3/20

(54) **Verfahren zum Sendeleistungsabgleich bei einem Mobilen Kommunikationsendgerät und Kommunikationsendgerät zur Durchführung des Verfahrens**
Method for transmit power compensation in a mobile communication terminal and communication terminal for implementing said method
Procédé de compensation de la puissance d'emission d'un terminal de communication et terminal de communication conçu pour la mise en oeuvre de ce procédé

(30) Priorität: 05.11.2002 DE 10251465
(43) Veröffentlichungstag der Anmeldung: 03.08.2005
(73) Patentinhaber: BenQ Mobile GmbH & Co. OHG, 81608 München (DE); BenQ Corporation, Gueishan Taoyuan 333 (TW)
(72) Erfinder: BRUNEL, Roman, 89073 Ulm (DE); LARKAMP, Markus, 47800 Krefeld (DE); OELSCHLÄGER, Martin, 12247 Berlin (DE); PAN, Sheng-Gen, 47475 Kamp-Lintfort (DE); PRUCHNER, Reiner, 88048 Friedrichshafen (DE); SCHÜTZE, Reiner, 47475 Kamp-Lintfort (DE); SIEBINGER, Stefan, 89312 Günzburg (DE); SKALSKI, Mark, 47800 Krefeld (DE)
(74) Vertreter: Epping - Hermann - Fischer
(86) Internationale Anmeldenummer: PCT/DE2003/003425
(87) Internationale Veröffentlichungsnummer: WO 2004/042946

(56) Entgegenhaltungen:
- EP-A- 0 396 347
- EP-A- 0 692 885
- WO-A-01/17141

## Beschreibung

Die Erfindung bezieht sich auf ein Verfahren zum Sendeleistungsabgleich bei einem mobilen Kommunikationsendgerät, das mit einem Leistungsverstärker, ausgerüslet ist. dessen Ausgangssignalamplitude von einer Frequenz eines Eingangssignals des Leistungsverstärkers abhängt und zum Betrieb auf mindestens einem Standard-Mobilfunkfrequenzbereich ausgelegt ist, wobei
der mindestens eine Standard-Mobilfunkfrequenzbereich in mehrere Frequenzintervalle aufgeteilt ist und für wenigstens einen Teil der Frequenzintervalle jeweils ein Leistungsabgleich durchgeführt wird
und wobei der Leistungsabgleich derart erfolgt, dass die HF-Leistung im wesentlichen unabhängig von einer Frequenz eines Eingangssignals des Leistungsverstärkers ist. Außerdem bezieht sich die Erfindung auf ein Kommunikationsendgerät, mit dem das Verfahren zum Sendeleistungsabgleich durchführbar ist.

Ein solches Verfahren bzw. Kommunikationsendgerät ist aus der WO 01/84741 bekannt.

Zudem ist aus der EP 0 692 885 A1 ein Verfahren zum Sendeleistungsabgleich bei einem mobilen Kommunikationsendgerät, das mit einem Leistungsverstärker, dessen Ausgangssignalamplitude von einer Frequenz eines Eingangssignals des Leistungsverstärkers abhängt, einem HF-Konnektor, einer internen Antenne und einem Anschluss für eine externe Antenne ausgestattet und zum Betrieb auf mindestens einem Standard-Möbilfunkfrequenzbereich ausgelegt ist, wobei der mindestens eine Standard-Mobilfunk-Frequenzbereich in mehrere Frequenzintervalle aufgeteilt ist und für wenigstens einen Teil der Frequenzintervalle jeweils ein Leistungsabgleich durchgeführt wird.

Das oben beschriebene Verfahren ist aus der EP 0 692 885 A1 bekannt, wobei dort Frequenzintervalle als einzelne Funkkanäle bezeichnet werden.

Zur Einrichtung einer Kommunikationsverbindung mittels Mobilfunkgeräten als Beispiel mobiler Kommunikationsendgeräte ist es erforderlich, dass elektromagnetische Wellen über Antennen der Kommunikationsendgeräte ausgesendet werden. Die mit der Aussendung elektromagnetischer Wellen einhergehenden elektromagnetischen Felder dringen beispielsweise in dem Fall, wenn ein Benutzer eines Kommunikationsendgerätes letzteres an sein Ohr hält, auch in menschliches Gewebe ein. Dies führt zur einer thermischen Belastung des menschlichen Gewebes, die innerhalb zulässiger Grenzen zu halten ist. Ein Maß zur Bewertung der thermischen Belastung ist der sogenannte "SAR-Wert", wobei die Abkürzung "SAR" für "specific absorption rate" steht. Einschlägige Grenzwerte sind in Normen, wie EN 50361, IEEE Std 1528-200X, festgehalten.

Da die Abmessungen mobiler Kommunikationsendgeräte zunehmend kleiner werden, konzentriert sich die Leistungsabstrahlung auf einen immer kleineren Bereich, so dass sich insbesondere bei einer zweckgemäßen Benutzung des Kommunikationsendgerätes auch eine zunehmende thermische Belastung für den Benutzer ergeben kann.

Im einzelnen ergeben sich Bereiche maximaler thermischer Belastung ("Hot Spots"), die den SAR-Wert bestimmen.

Zur Reduzierung des SAR-Wertes ist bisher in erster Linie in der Weise vorgegangen worden, dass strahlungsabsorbierende Bauelemente, wie eine Absorberfolie, in dem Kommunikationsendgeräte eingesetzt wurden. Alternativ können auch die mobilen Kommunikationsendgeräte von ihren Abmessungen her vergrößert werden, wobei jedoch das Design der Geräte beeinflusst wird.

Beispielsweise in der GSM-Spezifikation ist vorgeschrieben, welche minimale HF-Ausgangsleistung an einem HF-Konnektor bei einem mobilen Kommunikationsendgerät vorliegen muss, dass sowohl eine interne Antenne aufweist als auch zum Anschluss an eine externe Antenne über den HF-Konnektor ausgelegt ist. In diesem Zusammenhang ist es von Bedeutung, dass ein Leistungsverstärker eines mobilen Kommunikationsendgerätes hinsichtlich seiner Ausgangssignalamplitude von der Frequenz eines Eingangssignals des Leistungsverstärkers abhängt, d.h. die Antennenausgangsleistung des mobilen Kommunikationsendgerätes ist frequenz- bzw. kanalabhängig. Um nun den Anforderungen aus der hier beispielhaft angeführten GSM-Spezifikation zu genügen, wurde bisher auf den Kanal mit der geringsten Leistung abgeglichen, so dass für sämtliche Kanäle davon ausgegangen werden kann, dass sie über die GSMspezifische Minimalleistung verfügen. Diese Vorgehensweise führt dazu, dass der SAR-Wert etwa für in der Mitte des Frequenzspektrums gelegene Kanäle besonders hoch ist, wenn man von einem typischen Verlauf für die Frequenzabhängigkeit der abgestrahlten Leistung ausgeht.

Demgegenüber ist bisher noch nicht in Erwägung gezogen worden, einen Leistungsabgleich gezielt zur Optimierung des SAR-Wertes durchzuführen.

Ausgehend hiervon liegt der Erfindung die Aufgabe zu Grunde, ein Verfahren zum Leistungsabgleich bei einem mobilen Kommunikationsendgerät anzugeben, bei dem eine effektive Optimierung des SAR-Wertes vorgenommen werden kann. Außerdem soll ein Kommunikationsendgerät zur Durchführung des Verfahrens bereitgestellt werden.

Die oben genannte Aufgabe wird hinsichtlich des Verfahrens gelöst durch ein Verfahren zum Sendeleistungsabgleich nach dem Patentanspruch 1.

Nach dem neuen Verfahren ergibt es sich, dass, nicht wie bisher, nur für den gesamten Frequenzbereich ein Leistungsabgleich vorgenommen werden kann, sondern zusätzlich frequenzintervallspezifisch ein Leistungsabgleich durchgeführt wird. Die Frequenzintervalle können von gleich bleibender oder variierender Breite sein.

Auf diese Weise ist es möglich, gerade für mittlere Frequenzintervalle ebenfalls einen Leistungsabgleich vorzunehmen, was dazu führt, dass gerade der SAR-Wert der mittleren Frequenzintervalle vermindert und somit optimiert werden kann.

Dabei kann der Leistungsabgleich entweder für sämtliche Frequenzintervalle, in die der Standard-Mobilfunkfrequenzbereich aufgeteilt ist, oder aber beispielsweise nur für eine Anzahl Frequenzintervalle durchgeführt werden, bei denen die abgestrahlte Leistung der Antenne aufgrund ihrer Frequenzabhängigkeit besonders hoch ist. Auf diese Weise lässt sich sowohl etwaigen Spezifikationen eines Mobilfunk-Standards als auch den Anforderungen an einen möglichst geringen SAR-Wert gleichzeitig genügen.

Der Leistungsabgleich kann für die Frequenzintervalle mittels Zugriff auf eine Verweistabelle erfolgen, in der jedem Frequenzintervall ein Abgleichfaktor zugeordnet ist. Diese Abgleichfaktoren spiegeln den Frequenzverlauf des Leistungsverstärkers und ggf. der Antenneneigenschaften wieder, d.h. die Einträge in der Verweistabelle können dem Reziproken eines normierten Frequenzverlaufs des Leistungsverstärkers entsprechen. Auf diese Weise kann der SAR-Wert für das gerade aktuelle Frequenzintervall vermindert werden.

Bevorzugt erfolgt der Leistungsabgleich für den HF-Konnektor abhängig davon, ob das mobile Kommunikationsendgerät mit seiner internen Antenne oder mit einer externen Antenne betrieben wird. Im letzteren Fall kann eine Verweistabelle vorgesehen sein, die gewährleistet, dass an einem Eingang des HF-Konnektors ein Eingangssignal frequenzunabhängiger Amplitude anliegt. Hierbei werden die einschlägigen Spezifikationen berücksichtigt.

Ob das mobile Kommunikationsendgerät mit seiner internen oder einer externen Antenne arbeitet, kann bevorzugt mittels eines Antennendetektors festgestellt werden, der beispielsweise dann anspricht, wenn die interne Antenne in Betrieb genommen wird, so dass eine Situation vorliegt, bei der dem SAR-Wert besondere Bedeutung zukommt.

Bei einer bevorzugten Ausführungsform des Verfahrens kann der Leistungsabgleich bei Benutzung der internen Antenne derart erfolgen, dass eine Ausgangsleistung des mobilen Kommunikationsendgerätes im wesentlichen unabhängig von einer Frequenz eines Eingangssignals des Leistungsverstärkers ist. In diesem Fall ergibt sich, dass die Ausgangsleistung einer Sendeantenne des mobilen Kommunikationsendgerätes frequenzunabhängig ist. Dies hat den Vorteil, dass beispielsweise schwache Kanäle am Rande des Standard-Mobilfunkfrequenzbereichs in ihrer Leistung erhöht werden, so dass sich eine verbesserte Kommunikationsverbindung für eine Uplink-Verbindung zu einer Basisstation ergibt.

In besonders bevorzugter Weise erfolgt der Leistungsabgleich derart, dass eine Optimierung des SAR-Wertes über den mindestens einen Standard-Mobilfunkfrequenzbereich hervorgebracht wird.

Es ist hervorzuheben, dass das Verfahren selbstverständlich auch zum Sendeleistungsabgleich bei einem mobilen Kommunikationsendgerät durchführbar ist, das auf mehreren Standard-Mobilfunkfrequenzbereichen arbeiten kann. In diesem Falle sind beispielsweise mehrere Verweistabellen vorgesehen, die in der oben beschriebenen Weise benutzt werden.

Die oben genannte Aufgabe wird hinsichtlich des Kommunikationsendgerätes gelöst durch ein mobiles Kommunikationsendgerät nach dem Patentanspruch 4.

Die wesentlichen Merkmale des Kommunikationsendgerätes ergeben sich daraus, dass die erforderlichen Mittel für einen jeweiligen Leistungsabgleich für einzelne Frequenzintervalle eines Standard-Mobilfunkfrequenzbereichs bereitgestellt sind.. Diese Mittel können die bereits beschriebene Verweistabelle sein. Durch Verwendung eines Antennendetektors können verschiedene Verweistabellen für einen Leistungsabgleich für verschiedene Arbeitsbedingungen des mobilen Kommunikationsendgerätes verwendet werden, wobei sich die Arbeitsbedingungen dadurch unterscheiden, ob die Antenne extern oder intern vorliegt.

Es wird darauf hingewiesen, dass die software-implementierte Lösung, bei der eine Verweistabelle eingesetzt wird, sicherlich die kostengünstigere sein wird und daher insgesamt bevorzugt wird.

Ausführungsbeispiele der Erfindung werden nachfolgend anhand der Zeichnungen beschrieben. Es zeigen:
- Figur 1: den typischen Frequenzverlauf einer abgestrahlten Leistung einer Antenne eines mobilen Kommunikationsendgeräts mit einer einheitlichen. Eingangssignalamplitude;
- Figur 2: ein schematisches Blockschaltbild einer Sendeendstufe eines mobilen Kommunikationsendgerätes, mit der ein Leistüngsabgleich für einzelne Frequenzintervalle durchführbar ist und
- Figur 3: ein Beispiel einer Verweistabelle für ein Triband-Kommunikationsendgerät.

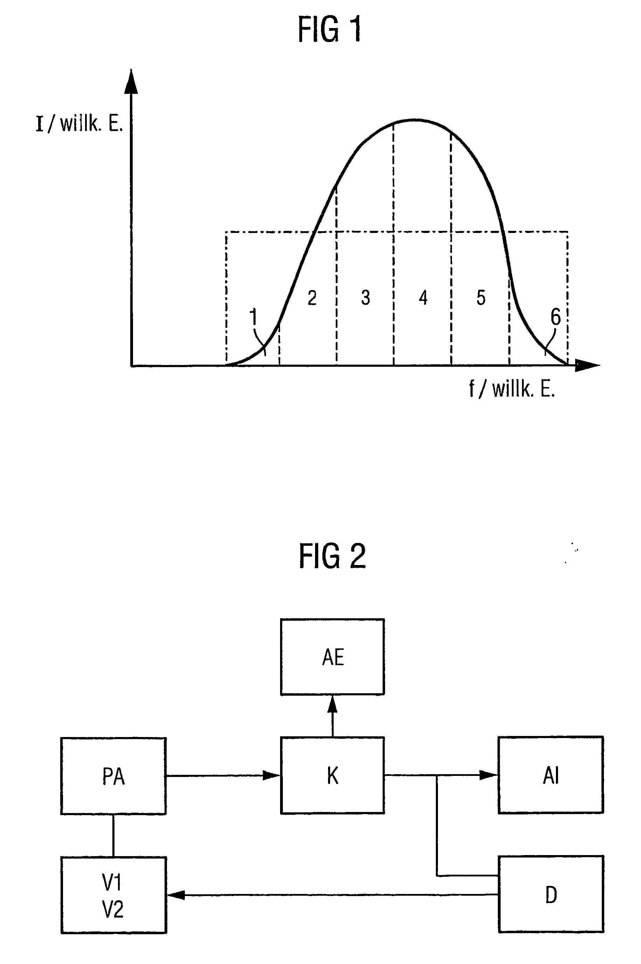

Wie aus Figur 1 hervorgeht, ist die Ausgangsleistung I einer Antenne AI bei gleichbleibender Eingangssignalamplitude für den Leistungsverstärker frequenzabhängig. Beispielshalber sind in Figur 1 insgesamt sechs Frequenzintervalle gezeigt, die jeweils verschiedene mittlere Ausgangsleistungen zeigen, wobei das Frequenzintervall 4 das Leistungsmaximum enthält. Für jedes der Frequenzintervalle 1 bis 6 wird einzeln ein Leistungsabgleich durchgeführt. Dieser Leistungsabgleich geht so vonstatten, dass für sämtliche Frequenzintervalle 1 bis 6 ein möglichst gleichbleibender SAR-Wert eingestellt wird.

Der nach einem Leistungsabgleich sich ergebende Frequenzverlauf für die Amplitude des Ausgangssignals des Leistungsverstärkers PA ist ebenfalls in Figur 1 dargestellt, und zwar mit Hilfe einer strichpunktierten Linie. Es wird ersichtlich, dass für die Frequenzintervalle bzw. Mobilfunkkanäle 1 und 6, die schwach ausgeprägt sind, durch den Leistungsabgleich eine Erhöhung ihrer Leistung bewirkt wird, so dass sie bei ihrer Benutzung in einer Uplink-Verbindung zu einer Basisstation eines Mobilfunknetzes über ein verbessertes Signal-Zu-RauschVerhältnis verfügen.

Der gesonderte Leistungsabgleich für sämtliche sechs Frequenzintervalle hat außerdem zur Folge, dass die von einer Antenne A abgestrahlte Leistung, die grundsätzlich auf einer Amplitude des Ausgangssignals des Leistungsverstärkers PA beruht, für besonders starke Kanäle, wie hier die Kanäle bzw. Frequenzintervalle 3 und 4, vermindert wird, was mit einer Verminderung des zugehörigen SAR-Wertes einhergeht. Insofern ergibt sich gegenüber dem Stand der Technik eine Verminderung des SAR-Wertes für die stärksten Kanäle bzw. Frequenzintervalle, auf denen das mobile Kommunikationsendgerät arbeitet.

Für die schwachen Frequenzintervalle 1 und 6 lässt sich die Leistung soweit erhöhen, bis der zugehörige SAR-Wert leicht unter einem vorbestimmten, maximalen SAR-Wert liegt, wobei als Randbedingung ein von der einschlägigen Mobilfunk-Spezifikation vorgegebener Wertebereich für die Kanalleistung zu berücksichtigen ist. Insgesamt ergibt sich eine gleichmäßigere Leistungsfähigkeit des mobilen Kommunikationsendgerätes über das Mobilfunkfrequenzspektrum, auf dem es gerade benutzt wird.

In der Figur 2 wird eine Ausführungsform eines Verfahrens zum Durchführen des Leistungsabgleichs dargestellt.

Ein Ausgangssignal des Leistungsverstärkers PA gelangt zu einem HF-Konnektor K, dessen Ausgangssignal einer internen Antenne AI zugeleitet wird. Bei der Ausführungsform gemäß Figur 2 steht die Antenne AI in Verbindung mit einem Antennendetektor D. Wenn der Antennendetektor D feststellt, dass das mobile Endgerät in einem Arbeitszustand mit interner Antenne AI arbeitet, wird er ein Signal zu einer Verweistabelle V2 senden. Die Verweistabelle V2 wählt einen frequenzabhängigen Leistungsabgleich aus. In einer verweistabelle V1 sind Werte für den HF-Konnektor K hinterlegt.

Auf die Verweistabelle V2 wird zugegriffen, wenn der Antennendetektor D feststellt, dass die interne Antenne AI des mobilen Kommunikationsendgerätes benutzt wird, deren Strahlungsleistung im Hinblick auf einen SAR-Wert kritisch ist. Die Verweistabelle V2 enthält Abgleichwerte für den Leistungsverstärker PA, die im Ergebnis dazu führen, dass die abgestrahlte Leistung des Kommunikationsendgerätes über ein gerade benutztes Standard-Mobilfunk-Spektrum im wesentlichen konstant ist.

Wenn dem gegenüber der Antennendetektor D feststellt, dass eine externe Antenne AE, die über einen geeigneten Anschluss ebenfalls mit dem HF-Konnektor verbunden ist, in Benutzung ist, wird auf die Verweistabelle V1 zugegriffen, deren Abgleichwerte so bemessen sind, dass sie an einem Eingang des HF-Konnektors für eine frequenzunabhängige HF-Leistung sorgen, die von dem Leistungsverstärker PA bereit gestellt wird.
Die Abgleichfaktoren in der Verweistabelle V2 sind so gewählt, dass für sämtliche Frequenzintervalle der SAR-Wert leicht unter dem vorbestimmten, maximalen SAR-Wert liegt. Die dafür notwendigen Abgleichfaktoren können empirisch ermittelt werden.

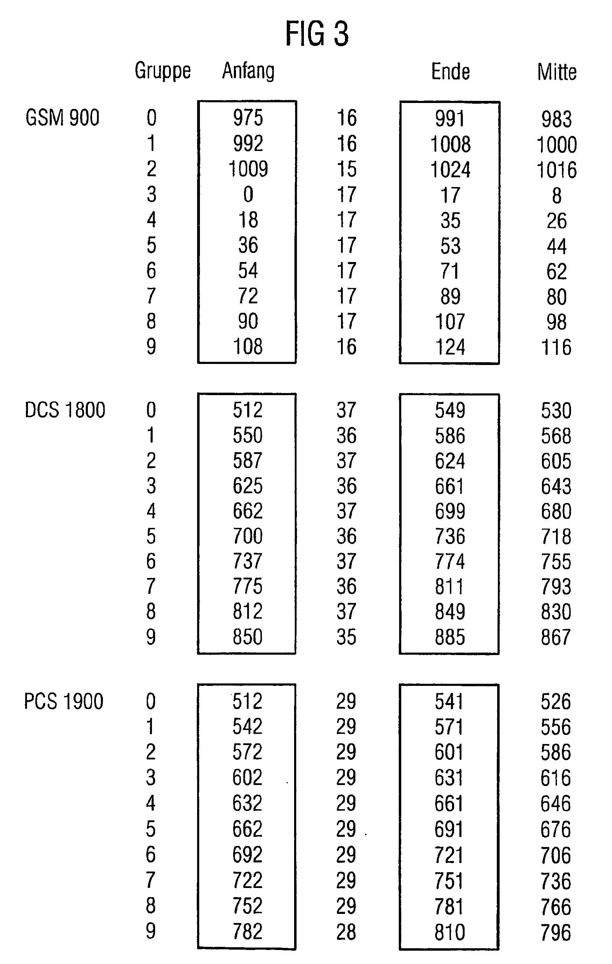

Ein Beispiel für die Verweistabelle V2 geht aus Figur 3 hervor, wobei sich die Verweistabelle V auf insgesamt drei Standard-Mobilfunkfrequenzbereiche bezieht, nämlich GSM 900, DCS 1800 und PCS 1900. Jeder dieser Frequenzbereiche ist insgesamt in zehn Gruppen aufgeteilt, wobei für jede Gruppe ihre Anfangsfrequenz, ihre Endfrequenz, die Differenzfrequenz zwischen Endfrequenz und Anfangsfrequenz sowie die Mittenfrequenz angegeben sind Jeder einzelnen Gruppe in der Verweistabelle V2 ist ein Abgleichwert zugeordnet, der sich beispielsweise in Abhängigkeit von Eigenschaften des Leistungsverstärkers und der Antenne oder weiteren Schaltungselementen empirisch ergibt.

## Patentansprüche

1. Verfahren zum Sendeleistungsabgleich bei einem mobilen Kommunikationsendgerät, das mit einem Leistungsverstärker, ausgrüslet ist dessen Ausgangssignalamplitude von einer Frequenz eines Eingangssignals des Leistungsverstärkers abhängt und zum Betrieb auf mindestens einem Standard-Mobilfunkfrequenzbereich ausgelegt ist,
wobei
der mindestens eine Standard-Mobilfunkfrequenzbereich in mehrere Frequenzintervalle aufgeteilt ist und für wenigstens einen Teil der Frequenzintervalle jeweils ein Leistungsabgleich durchgeführt wird
und wobei der Leistungsabgleich derart erfolgt, dass die HF-Leistung im wesentlichen unabhängig von einer Frequenz eines Eingangssignals des Leistungsverstärkers ist,
**dadurch gekennzeichnet, dass**
der Leistungsabgleich aufgrund von Messungen eines Antennendetektors erfolgt, der feststellt, ob eine interne oder eine externe Antenne, die über einen HF-Konnektor für die externe Antenne zuschaltbar ist, benutzt wird,
bei einer Benutzung der externen Antenne der Leistungsabgleich derart erfolgt, dass eine an dem HF-Konnektor anliegende HF-Leistung im wesentlichen unabhängig von einer Frequenz eines Eingangssignals des Leistungsverstärkers ist und
bei einer Benutzung der internen Antenne der Leistungsabgleich derart erfolgt, dass eine abgestrahlte Leistung des mobilen Kommunikationsendgerätes im wesentlichen unabhängig von einer Frequenz eines Eingangssignals des Leistungsverstärkers ist.

2. Verfahren nach Anspruch 1,
**dadurch gekennzeichnet, dass**
der Leistungsabgleich für die Frequenzintervalle mittels Zugriff auf mindestens eine Verweistabelle erfolgt, in der jedem Frequenzintervall ein Abgleichfaktor zugeordnet ist.

3. Mobiles Kommunikationsendgerät mit einem Leistungsverstärker, dessen Ausgangssignalamplitude von einer Frequenz eines Eingangssignals des Leistungsverstärkers abhängt, und mit einer Einrichtung zum Leistungsabgleich für eine Ausgangsleistung des Kommunikationsendgerätes in mindestens einem Standard-Mobilfunkfrequenzbereich, wobei die Einrichtung zum Leistungsabgleich zum Abgleich der Ausgangsleistung für mehrere Frequenzintervalle (1; 2; 3; 4; 5; 6) des mindestens einen Standard-Mobilfunkfrequenzbereichs derart ausgebildet ist, dass die Ausgangsleistung im wesentlichen unabhängig von einer Frequenz eines Eingangssignals des Leistungsverstärkers ist,
**dadurch gekennzeichnet, dass**
ein HF-Konnektor, eine interne Antenne und ein Anschluss für eine externe Antenne vorgesehen sind,
die Einrichtung zum Leistungsabgleich mit einem Antennendetektor (D) des mobilen Kommunikationsendgerätes in Verbindung steht, der feststellt, ob die interne oder die externe Antenne benutzt wird,
und ausgebildet ist, die Einrichtung zum Leistungsabgleich derart zu steuern
dass eine an dem HF-Konnektor anliegende HF-Leistung im wesentlichen unabhängig von einer Frequenz eines Eingangssignals des Leistungsverstärkers ist,
und ausgebildet ist, die Einrichtung zum Leistungsabgleich derart zu steuern dass bei einer Benutzung der internen Antenne der Leistungsabgleich derart erfolgt, dass eine abgestrahlte Leistung des mobilen Kommunikationsendgerätes im wesentlichen unabhängig von einer Frequenz eines Eingangssignals des Leistungsverstärkers ist.

4. Kommunikationsendgerät nach Anspruch 3,
**dadurch gekennzeichnet, dass**
die Einrichtung zum Leistungsabgleich mindestens eine software-implementierten Verweistabelle (V1; V2) aufweist, in der jedem Frequenzintervall (1; 2; 3; 4; 5; 6) ein Abgleichfaktor zugeordnet ist.

## Claims

1. Method for transmission power adjustments for a mobile communications terminal, which is equipped with a power amplifier whose output signal amplitude depends on the frequency of an input signal to the power amplifier, and for operation in at least one standard mobile radio frequency band,
wherein
the at least one standard mobile radio frequency band is subdivided into two or more frequency intervals, and one power adjustment operation is carried out in each case for at least some of the frequency intervals,
and wherein the power adjustment is carried out in such a way that the RF power is essentially independent of the frequency of an input signal to the power amplifier,
**characterized in that**
the power adjustment is carried out on the basis of measurements by an antenna detector which determines whether an internal antenna or an external antenna, which can be connected via an RF connector for the external antenna, is being used,
when the external antenna is being used, the power adjustment is carried out in such a way that the RF power which is applied to the RF connector is essentially independent of the frequency of an input signal to the power amplifier, and
when the internal antenna is being used, the power adjustment is carried out in such a way that the power emitted from the mobile communications terminal is essentially independent of the frequency of an input signal to the power amplifier.

2. Method according to Claim 1,
**characterized in that**
the power adjustment for the frequency intervals is carried out by access to at least one reference table, in which an adjustment factor is associated with each frequency interval.

3. Mobile communications terminal having a power amplifier whose output signal amplitude depends on the frequency of the input signal to the power amplifier, and having a device for power adjustment for the output power from the communications terminal in at least one standard mobile radio frequency band, wherein
the device for power adjustment is designed to adjust the output power for two or more frequency intervals (1; 2; 3; 4; 5; 6) in the at least one standard mobile radio frequency band in such a way that the output power is essentially independent of the frequency of an input signal to the power amplifier,
**characterized in that**
an RF connector, an internal antenna and a connection for an external antenna are provided,
the device for power adjustment is connected to an antenna detector (D) in the mobile communications terminal, which determines whether the internal or the external antenna is being used,
and is designed to control the device for power adjustment in such a manner that the RF power which is applied to the RF connector is essentially independent of the frequency of an input signal to the power amplifier, and is designed to control the device for power adjustment in such a way that, when the internal antenna is being used, the power adjustment is carried out in such a way that the power emitted from the mobile communications terminal is essentially independent of the frequency of an input signal to the power amplifier.

4. Communications terminal according to Claim 3,
**characterized in that**
the device for power adjustment has at least one software-implemented reference table (V1; V2), in which an adjustment factor is associated with each frequency interval (1; 2; 3; 4; 5; 6).

## Revendications

1. Procédé de réglage de la puissance d'émission dans un terminal de communication mobile qui est équipé d'un amplificateur de puissance, dont l'amplitude du signal de sortie dépend d'une fréquence d'un signal d'entrée de l'amplificateur de puissance, et qui est conçu pour fonctionner sur au moins une gamme de fréquence radio mobile standard,
l'au moins une gamme de fréquence radio mobile standard étant répartie en plusieurs intervalles de fréquence et un réglage de puissance étant respectivement réalisé pour au moins une partie des intervalles de fréquence
et le réglage de puissance étant effectué de telle manière que la puissance HF est essentiellement indépendante d'une fréquence d'un signal d'entrée de l'amplificateur de puissance,
**caractérisé en ce que**
le réglage de puissance est effectué en raison de mesures d'un détecteur d'antenne qui constate si une antenne interne ou une antenne externe qui est connectable par l'intermédiaire d'un connecteur HF pour l'antenne externe, est utilisée,
en cas d'une utilisation de l'antenne externe, le réglage de puissance est effectué de telle manière qu'une puissance HF appliqué sur le connecteur HF est réalisée essentiellement indépendamment d'une fréquence d'un signal d'entrée de l'amplificateur de puissance et
en cas d'une utilisation de l'antenne interne, le réglage de puissance est effectué de telle manière qu'une puissance émise du terminal de communication mobile est essentiellement indépendante d'une fréquence d'un signal d'entrée de l'amplificateur de puissance.

2. Procédé selon la revendication 1,
**caractérisé en ce que**
le réglage de puissance pour les intervalles de fréquence est effectué au moyen d'un accès à au moins un tableau de références, dans lequel un facteur de réglage est affecté à chaque intervalle de fréquence.

3. Terminal de communication mobile comprenant un amplificateur de puissance, dont l'amplitude du signal de sortie dépend d'une fréquence d'un signal d'entrée de l'amplificateur de puissance, et comprenant un dispositif de réglage de puissance pour une puissance de sortie du terminal de communication dans au moins une gamme de fréquence radio mobile standard, le dispositif de réglage de puissance étant conçu pour le réglage de la puissance de sortie pour plusieurs intervalles de fréquence (1 ; 2 ; 3 ; 4 ; 5 ; 6) de l'au moins une gamme de fréquence radio mobile standard, de telle manière que la puissance de sortie est essentiellement indépendante d'une fréquence d'un signal d' entrée- de l'amplificateur de puissance,
**caractérisé**
**en ce qu'**un connecteur HF, une antenne interne et un raccordement pour une antenne externe sont prévus,
**en ce que** le dispositif de réglage de puissance est en liaison avec un détecteur d'antenne (D) du terminal de communication mobile, ce détecteur d'antenne constatant si l'antenne interne ou l'antenne externe est utilisée,
et **en ce qu'**il est conçu pour commander le dispositif de réglage de puissance de telle manière qu'une puissance HF présente sur le connecteur HF est essentiellement indépendante d'une fréquence d'un signal d'entrée de l'amplificateur de puissance,
et **en ce qu'**il est conçu pour commander le dispositif de réglage de puissance de telle manière qu'en cas d'une utilisation de l'antenne interne, le réglage de puissance est effectué de telle façon qu'une puissance émise du terminal de communication mobile est essentiellement indépendante d'une fréquence d'un signal d'entrée de l'amplificateur de puissance.

4. Terminal de communication selon la revendication 3,
**caractérisé en ce que**
le dispositif de réglage de puissance présente au moins un tableau de références (V1 ; V2) réalisé par logiciel, dans lequel tableau un facteur de réglage est affecté à chaque intervalle de fréquence (1 ; 2 ; 3 ; 4 ; 5 ; 6).
